# EUROPEAN PATENT APPLICATION

(11) **EP 4 614 113 A1**
(43) Date of publication of application: **10.09.2025**
(21) Application number: 24161648.1
(22) Date of filing: 06.03.2024
(51) Int. Cl.: G01D 9/00, G01D 11/24, G01K 1/00, G06F 17/40

(54) **DATA LOGGER**

(71) Applicant: Tecnosoft s.r.l., 20068 Peschiera Borromeo (MI) (IT)
(72) Inventor: ROSSI, Sergio, 20068 Peschiera Borromeo (MI) (IT); ARALDI, Lorenzo, 20068 Peschiera Borromeo (MI) (IT)
(74) Representative: Brevalex

(57) **Abstract**

The invention is related to a data logger (1, 1'), comprising a base (20) surmonted by a cover (21) so as to form a main body (2), and a fixation assembly configured to allow connection from outside of said main body (2) to a processing unit (27) housed in said main body (2), said fixation assembly comprising at least one tube (22) connected to said cover (21) through a circular connecting piece (23),
said data logger (1) further comprising a flexible probe (3) having a first end prolonged by at least one head (4), and a second end opposite to said first end and connected to said processing unit (27), said flexible probe (3) passing through said tube (22) so as to exit from said fixation assembly at a first interface area (A),
characterized in that said data logger (1) further comprises means for protecting said first interface area (A), in the form of a protective sleeve (5, 5') having a hollow cylindrical shaped wall extending around an outer surface of at least one part of each of said tube (22) and said flexible probe (3) so as to externally cover said first interface area (A), said protective sleeve (5) being fixed onto said tube (22) in least one point at said first interface area (A), said protective sleeve (5) having at least one deformation at a point facing said flexible probe (3).

## Description

### Field of the invention

The present invention is in the field of datalogger devices, also called data logger devices or data loggers. More particularly, the present disclosure is related to a data logger withstanding high temperatures and pressures, and comprising a flexible probe.

Such data logger can be used for example in the field of agriculture, pharmaceutical industry or food.

### Background of the invention

For years, data loggers have been implemented in every field where it can be useful to measure and record various parameters. Data loggers can be used for example in the field of agriculture, pharmaceutical industry or food, tipically in sterilisation and pasteurisation processes. Data loggers can be exposed to temperatures up to 140°C and to steam environments saturated with absolute pressures up to more than 3 bar, and thus have to withstand high temperatures and pressures.

A conventional data logger, also called datalogger or data recorder, is an electronic device that records data over time or about location. To achieve that, they are generally battery-powered, and are equipped with a microprocessor, an internal memory for data storage, and one or more sensors.

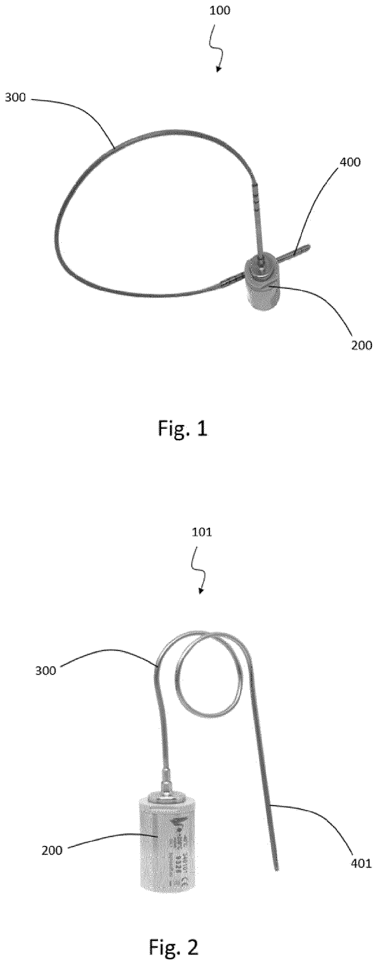

As visible in data loggers 100, 101 illustrated in figures 1 and 2, all the electronic components such as the microprocessor, which can be a part of a processing unit, are generally incorporated in a main body 200. Such main body can for example comprise a base surmonted by a cover. This main body can be watertight.

Generally, data loggers also comprise one or more probes 300. Those probes can be of different types, as for example rigid, collapsible or flexible, mainly depending on the context of use of the data logger.

Data loggers that have a flexible probe can for example be installed in installations that require frequent handling of the instrument.

Such flexible probe has for example a first end prolonged by one head 400 which can contain one or more sensors (such as thermocouple, thermistor,...), and a second end opposite to the first end and connected to the processing unit.

However, in a case of manipulated probes, there can be external forces that tend to tear the probe and torque forces that tend to make the probe rotate in the steel tube. In this case, the probe can be deteriorated or broken by the multiplication of torsions and extensions.

Moreover, rubbings on the top of the cover can also deteriorate the probe or cut it which is not suitable for the reliability of such data logger.

There is therefore a need to provide a solution to make such data logger more reliable, in particular by limiting the risks of breakage of the various components, especially in areas of significant mechanical fragility. There is also a need to provide a solution that is cheap and easy to use and implement.

The aim of the invention is to provide a solution to this problem of fragility.

### Summary of the invention

The aim of the solution presented below is to provide a solution to at least one of the problem listed above.

For this purpose, the invention is related to a data logger, comprising a base surmonted by a cover so as to form a main body, and a fixation assembly configured to allow connection from outside of said main body to a processing unit housed in said main body, said fixation assembly comprising at least one tube connected to said cover through a circular connecting piece, said data logger further comprising a flexible probe having a first end prolonged by at least one head, and a second end opposite to said first end and connected to said processing unit, said flexible probe passing through said tube so as to exit from said fixation assembly at a first interface area.

According to the invention, said data logger further comprises means for protecting said first interface area, in the form of a protective sleeve having a hollow cylindrical shaped wall extending around an outer surface of at least one part of each of said tube and said flexible probe so as to externally cover said first interface area, said protective sleeve being fixed onto said tube in least one point at said first interface area, said protective sleeve having at least one deformation at a point facing said flexible probe.

The implementation of such protective sleeve extending around an outer surface of at least one part of each of said tube and said flexible probe so as to externally cover said first interface area, together with the fact that the protective sleeve has a deformation at at least one point facing said flexible probe, prevents the risk of frequent flexible probes rotation and thus the risk of flexible probe breakage. Indeed, as the protective sleeve covers said first interface area, it reduces the regular rubbing of the flexible probe on the end of the tube which could occur in the solutions of the prior art.

According to one embodiment of the invention, said tube is crimped onto said flexible probe in at least one point.

According to one embodiment of the invention, said protective sleeve comprises a first end configured to face said circular connecting piece and a second end opposite to said first end, said second end comprising a flap superimposed on an inner surface of said hollow cylindrical shaped wall in such a way that said protective sleeve has a greater thickness at said second end than a thickness at said first end.

This greater thickness at said second end improves the prevention of the rotation of the flexible probe relative to the main body together with the deformation.

According to one embodiment of the invention, said deformation is made by stamping or by pressing.

According to one embodiment of the invention, said thickness of said hollow cylindrical shaped wall at said first end is constant and is comprised between 0,1mm and 2mm, preferably between 0,25mm and 0,75mm, preferably susbstantially equal to 0,5mm.

According to one embodiment of the invention, said thickness at said second end is between two and three times greater than said thickness at said first end.

According to one embodiment of the invention, said second end extends over an axial length of between 10% and 50% of an axial length of said protective sleeve, preferably between 25% and 33% of an axial length of said protective sleeve.

According to one embodiment of the invention, said flap extends over an axial length of between 10% and 50% of an axial length of said protective sleeve, preferably between 25% and 33% of an axial length of said protective sleeve.

According to one embodiment of the invention, said protective sleeve has an axial length comprised between 4mm and 12mm, preferably between 6mm and 10mm, preferably susbstantially equal to 8mm.

According to one embodiment of the invention, said protective sleeve has a diameter comprised between 2mm and 8mm, preferably between 3mm and 5mm, preferably susbstantially equal to 4mm.

According to one embodiment of the invention, said protective sleeve is at least partially made from stainless steel.

This material improves the position holding of the protective sleeve onto the first interface area and thus the efficiency of this protective sleeve.

According to one embodiment of the invention, said protective sleeve is held in position at said first interface area by welding on said tube.

This allows the implementation of a solution technically simple and low cost to maintain the protective sleeve.

According to one embodiment of the invention, said data logger comprises a plurality of flexible probes, each of said flexible probe passing through a distinct tube so as to exit from said fixation assembly at distinct first interface areas, said data logger further comprises a plurality of protective sleeves, each of said protective sleeves externally covers one of said distinct first interface areas.

According to one embodiment of the invention, said first end of flexible probe is prolonged by said at least one head at a second interface area, said data logger further comprises means for protecting said second interface area, in the form of a protective sleeve having a hollow cylindrical shaped wall extending around an outer surface of at least one part of each of said at least one head and said probe so as to externally cover said second interface area.

### List of figures

The invention, as well as its various advantages, will be more easily understood in the light of the following description of illustrative and non-limiting embodiments thereof, and of the appended drawings among which:
- Figure 1 is a schematical view of a data logger of the prior art;
- Figure 2 is a schematical view of an other data logger of the prior art;
- Figure 3 is a perspective view of a data logger according to a first embodiment of the invention ;
- Figure 4 is a perspective view of a part of a data logger according to the first embodiment of the invention, illustrating the first interface area ;
- Figure 5 is a perspective view of a part of a data logger according to the first embodiment of the invention, illustrating the second interface area ;
- Figure 6 is a perspective view of a protective sleeve according to the first embodiment of the invention ;
- Figure 7 is a cross sectional view of a protective sleeve according to the first embodiment of the invention;
- Figure 8 is a schematical view of a part of a data logger according to the first embodiment of the invention, and
- Figure 9 is a schematical view of a data logger according to a second embodiment of the invention.

### Detailed description of an embodiment of the invention

As detailed above, the aim of the solution object of the invention is to provide a solution to prevent the risk of frequent flexible probes rotation and thus the risk of flexible probes breakage.

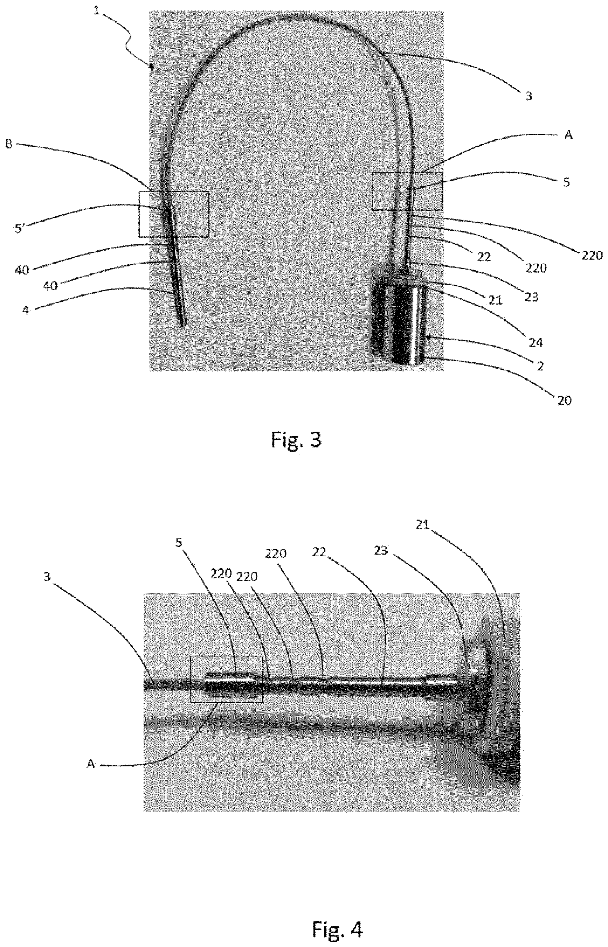

To achieve this, a first embodiment of the invention, illustrative and non-limitative, is detailed below in relation with figures 3 to 8.

As illustrated in figure 3, the data logger 1 of the invention comprises a base 20 surmonted by a cover 21 so as to form a main body 2, and a fixation assembly.

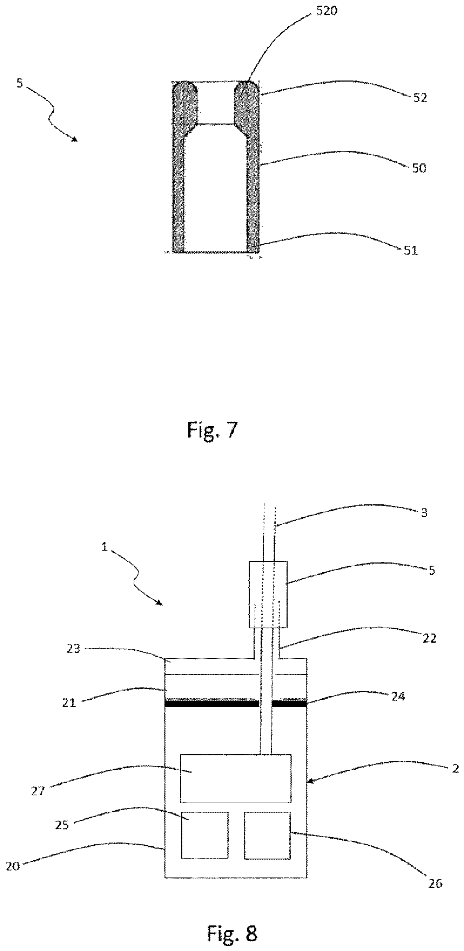

In this embodiment, and as visible in figure 8, this main body 2 has a cylindrical shape. It encloses, in the base 20 part, a processing unit 27, a battery 26, and a memory 25. In this embodiment, a gasket 24 is also implemented between the base 20 and the cover 21 in order to create a seal. The cover 21 can be screwed to the base 20.

As for the fixation assembly, it is configured to allow connection from outside of the main body 2 to the processing unit 27 housed in the main body 2. It is provided with one tube 22 which is connected to the cover 21 through a circular connecting piece 23 which has a hollow shape in order to let the tube passing through it. This tube 22 can be fixed to the circular connecting piece 23 by welding, screwing or bonding.

In this embodiment, this tube 22 is welded on the circular connecting piece 23. As for the circular connecting piece 23, it can be screwed to the cover 21.

As illustrated for example in figure 3, data logger 1 further comprises a flexible probe 3. This flexible probe 3 has a first end prolonged by at least one head 4.

This head 4, also called sensor unit, can contain a plurality of sensors as, for example, temperature sensors, humidity sensors, or pressure sensors.

It also has a second end opposite to the first end and configured to be directly or indirectly connected to the processing unit 27 by passing through the tube and the hollow circular connecting piece 23.

In other words, the flexible probe 3 is implemented such as it passes along an internal surface of the tube 22 to be connected directly or indirectly to the processing unit 27 managed inside the main body 2 of the data logger 1.

Preferably, the tube 22 is made from stainless steel.

As illustrated for example in figure 4, in this embodiment, the tube 22 is crimped onto the flexible probe 3 at three different points 220 in such a way that the interior of the main body is sealed and no liquid can penetrate inside this main body 2.

In other embodiments, the tube could be crimped onto the flexible probe at more than three points. More generally, the tube could be crimped onto the flexible probe at least at one point, depending on the use of the data logger.

According to the invention, the flexible probe 3 passes through the tube 22 so as to exit from the fixation assembly at a first interface area A.

In other words, the first interface A area is the area where the flexible probe 3 exits from the tube 22, which also corresponds to the area where the flexible probe 3 enters in the tube 22 from the outside of the tube.

According to the invention, and in order to prevent the risk of frequent flexible probe rotation and thus the risk of flexible probe breakage, the data logger 1 further comprises means for protecting the first interface area A.

According to the invention, thoses means for protecting the first interface area A are in the form of a protective sleeve 5 having a hollow cylindrical shaped wall which extends around an outer surface of at least one part of each of the tube 22 and the flexible probe 3 so as to externally cover the first interface area A.

Moreover, the protective sleeve 5 is fixed onto the tube 22 in least one point at the first interface area A.

This fixation of the protective sleeve 5 onto the tube 22 can be made for example by welding.

Moreover, in order to prevent rotation of the flexible probe 3, the protective sleeve 5 has at least one deformation at a point facing the flexible probe 3. This deformation can, for example, be made by stamping or by pressing. Moreover, it can be extended to the whole perimeter of the protective sleeve in order to distribute the mechanical forces exerted onto the protective sleeve on the whole perimeter of this protective sleeve.

In this embodiment, the protective sleeve 5 extends around an outer surface of a part of the tube 22, which corresponds to the end of the tube 22, and a part of the flexible probe 3, so as to externally cover the first interface area A.

In this embodiment, the protective sleeve 5 is at least partially made from stainless steel so as to improve the holding in position of the protective sleeve onto the first interface area A.

Moreover, in this embodiment, the protective sleeve 5 has an axial length susbstantially equal to 8mm in order to extend around an outer surface of a part of each of the tube 22 and the probe 3, so as to externally cover the first interface area A.

However, in other embodiments, the protective sleeve 5 could have an axial length comprised between 4mm and 12mm, preferably between 6mm and 10mm.

Besides, in this embodiment, the protective sleeve 5 has a diameter substantially equal to 4mm. Thus, it is configured to externally cover the first interface area A with a small gap useful to position the protective sleeve 5.

However, in other embodiments, the protective sleeve could have a diameter comprised between 2mm and 8mm, preferably between 3mm and 5mm.

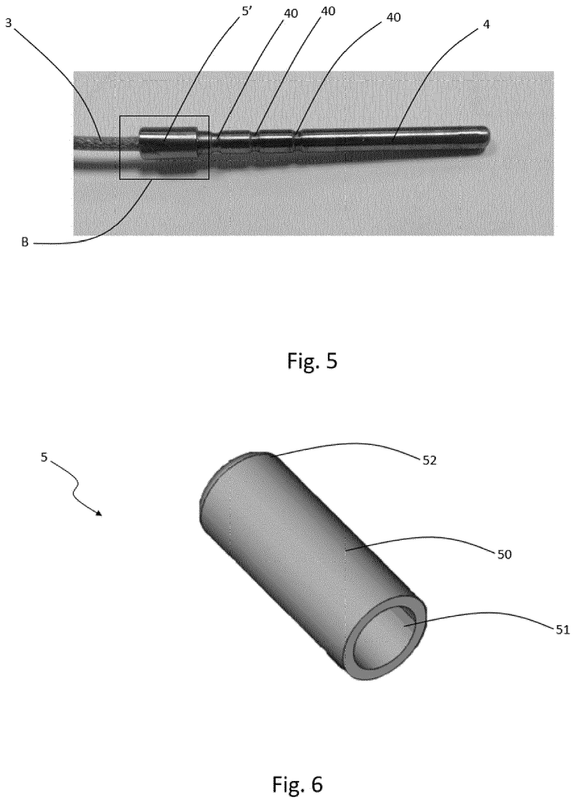

As illustrated in figures 6 and 7, the protective sleeve 5 comprises a first end 51 configured to face the circular connecting piece 23, and thus indirectly the main body 2, and a second end 52 opposite to the first end 51.

As more particularly visible in figure 7, the second end 52 comprises a flap 520 superimposed on an inner surface of the hollow cylindrical shaped wall of the protective sleeve 5 in such a way that the protective sleeve 5 has a greater thickness at the second end 52 than a thickness at the first end 51.

In other words, at the location of the second end 52, the wall is folded in such a way that it extends along an inner surface of a part of the wall to create an extra thickness at the location of the second end 52 than a thickness at the location of the first end 51.

In other words, at the location of the second end 52, the wall is curved on itself to create an extra thickness at the location of the second end 52 than a thickness at the location of the first end 51.

This flap has, in this embodiment, a circular shape, rounded at the folding location, thus without sharped angle, in order to avoid the deterioration of the flexible probe.

In this embodiment, the thickness of the hollow cylindrical shaped wall at the first end 51 is constant and is susbstantially equal to 0,5mm.

However, in other embodiments, the thickness of the hollow cylindrical shaped wall at the first end could be constant and comprised between 0,1mm and 2mm, preferably between 0,25mm and 0,75mm.

Moreover, in other embodiments, the thickness of the hollow cylindrical shaped wall at the first end could be variable.

More precisely, in this embodiment, the thickness at the second end 52 is between two and three times greater than the thickness at the first end 51.

This tickness corresponds in fact to a double thickness of the wall plus a space between the main wall and the flap 520.

Concerning the distribution of the first end 51, the second end 52, and the central portion 50 on the protective sleeve 5, the second end 52 extends over an axial length between 25% and 33% of an axial length of the protective sleeve 5. Moreover, in this embodiment, the flap 520 extends on the whole axial length of the second end 52.

However, in other embodiments, the second end could extend over an axial length of between 10% and 50% of an axial length of the protective sleeve.

Moreover, in other embodiments, the flap could extend over an axial length of between 10% and 50% of an axial length of the protective sleeve.

With the help of the flap, in this embodiment, together with the deformation, the flexible probe is held in position and prevented from rotating relative to the main body 2.

As visible on figure 3, in this embodiment, the first end of the flexible probe 3 is prolonged by at least one head 4 at a second interface area B. This head 4 can contain one or more sensors such as thermocouple or thermistor.

In this embodiment, and as illustrated on figure 5, the head 4 is crimped onto the flexible probe 3 at some points 40.

In a similar way as for the first interface area A, the second interface area B can be defined as the area where the flexible probe 3 is connected to the head.

In this embodiment, the data logger 1 further comprises means for protecting the second interface area B.

These means for protecting the second interface area B take the form of a protective sleeve 5' having, in a similar way as the protective sleeve 5 a hollow cylindrical shaped wall extending around an outer surface of at least one part of each of the head 4 and the flexible probe 3 so as to externally cover the second interface area B.

This protective sleeve 5' can be welded to the head 4 in order to be held in position at the second interface area B.

In this embodiment, the protective sleeve 5' extends around an outer surface of a part of the head 4 and a part of the flexible probe 3, so as to externally cover the second interface area B.

In this embodiment, the protective sleeve 5' is at least partially made from stainless steel so as to improve the holding in position of the protective sleeve 5' onto the second interface area B.

Moreover, in this embodiment, the protective sleeve 5' has an axial length susbstantially equal to 8mm in order to extend around an outer surface of a part of each of the head 4 and the probe 3, so as to externally cover the second interface area B.

However, in other embodiments, the protective sleeve could have an axial length comprised between 4mm and 12mm, preferably between 6mm and 10mm.

Besides, in this embodiment, the protective sleeve 5' has a diameter substantially equal to 4mm. Indeed, it is configured to externally cover the second interface area B with a small gap useful to position the protective sleeve 5'.

However, in other embodiments, the protective sleeve could have a diameter comprised between 0.5mm and 10mm, preferably between 2mm and 8mm, preferably between 3mm and 5mm.

The protective sleeve 5' comprises a first end configured to face the head, and a second end opposite to the first end.

More particularly, the second end comprises a flap superimposed on an inner surface of the hollow cylindrical shaped wall of the protective sleeve in such a way that the protective sleeve 5' has a greater thickness at the second end than a thickness at the first end.

In other words, at the location of the second end, the wall is folded in such a way that it extends along an inner surface of a part of the wall to create an extra thickness at the location of the second end than a thickness at the location of the first end.

In other words, at the location of the second end, the wall is curved on itself to create an extra thickness at the location of the second end than a thickness at the location of the first end.

In this embodiment, the thickness of the hollow cylindrical shaped wall at the first end is constant and is susbstantially equal to 0,5mm.

However, in other embodiments, the thickness of the hollow cylindrical shaped wall at the first end could be constant and comprised between 0,1mm and 2mm, preferably between 0,25mm and 0,75mm.

Moreover, in other embodiments, the thickness of the hollow cylindrical shaped wall at the first end could be variable.

More precisely, in this embodiment, the thickness at the second end is between two and three times greater than the thickness at the first end.

This tickness corresponds in fact to a double thickness of the wall plus a space between the main wall and the flap.

The second end extends over an axial length between 25% and 33% of an axial length of the protective sleeve 5'. Moreover, in this embodiment, the flap extends on the whole axial length of the second end.

However, in other embodiments, the second end could extend over an axial length of between 10% and 50% of an axial length of the protective sleeve.

Moreover, in other embodiments, the flap could extend over an axial length of between 10% and 50% of an axial length of the protective sleeve.

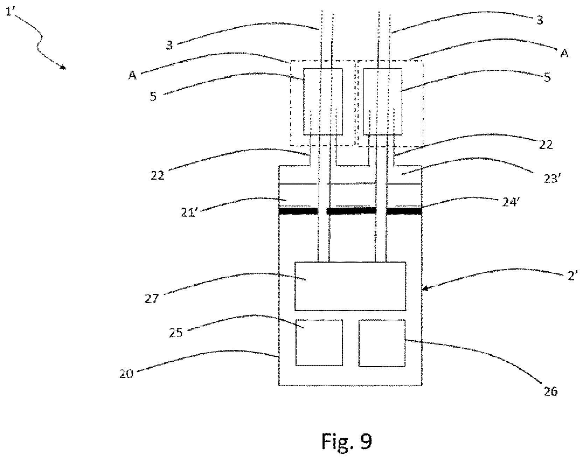

A second embodiment of the invention, illustrative and non-limitative, is detailed below in relation with figure 9.

In this second embodiment of the invention, features which are the same as for the first embodiment of the invention are not detailed.

In this second embodiment, and as illustrated, the data logger 1' comprises a plurality of flexible probes 3.

Moreover, in this embodiment, the data logger 1' comprises a base 20 surmonted by a cover 21' so as to form a main body 2', and a fixation assembly.

In this embodiment, and as visible in figure 9, this main body 2' has a cylindrical shape. It encloses, in the base 20 part, a processing unit 27, a battery 26, and a memory 25. In this embodiment, a gasket 24' is also implemented between the base 20 and the cover 21' in order to create a seal. The cover 21' can be screwed to the base 20.

As for the fixation assembly, it is configured to allow connection from outside of the main body 2 to the processing unit 27 housed in the main body 2'. It is provided with a plurality of tubes 22 which are connected to the cover 21' through a circular connecting piece 23' having a plurality of holes, each for one tube 22, in order to let the tubes passing through it. These tubes 22 can be fixed to the circular connecting piece 23' by welding, screwing or bonding. In this embodiment, these tubes 22 are welded on the circular connecting piece 23'.

Each of the flexible probes 3 has a first end prolonged by at least one head, and a second end opposite to the first end and configured to be connected directly or indirectly to the processing unit 27.

As for the first embodiment disclosed, the flexible probes 3 in this second embodiment pass through the tubes 22 so as to exit from the fixation assembly, and more particularly so that each exit from one of the tubes at first interface areas A.

More particularly, each of the flexible probes 3 passes through a distinct tube 22 so as to exit from the fixation assembly, and more particularly from the tubes 22 at a distinct first interface area A.

According to this embodiment, the data logger 1' further comprises means for protecting each of said first interface areas A in the form of protective sleeves 5 having a hollow cylindrical shaped wall extending around an outer surface of at least one part of each of said tube 22 and each of the flexible probes 3 so as to externally cover the first interface areas A. More precisely, the data logger 1' comprises a plurality of protective sleeves 5, each of said first interface areas A having a distinct protective sleeve 5 so as to externally cover each of said first interface areas A.

## Claims

1. Data logger (1, 1'), comprising a base (20) surmonted by a cover (21) so as to form a main body (2), and a fixation assembly configured to allow connection from outside of said main body (2) to a processing unit (27) housed in said main body (2), said fixation assembly comprising at least one tube (22) connected to said cover (21) through a circular connecting piece (23),
said data logger (1) further comprising a flexible probe (3) having a first end prolonged by at least one head (4), and a second end opposite to said first end and connected to said processing unit (27), said flexible probe (3) passing through said tube (22) so as to exit from said fixation assembly at a first interface area (A),
**characterized in that** said data logger (1) further comprises means for protecting said first interface area (A), in the form of a protective sleeve (5, 5') having a hollow cylindrical shaped wall extending around an outer surface of at least one part of each of said tube (22) and said flexible probe (3) so as to externally cover said first interface area (A), said protective sleeve (5) being fixed onto said tube (22) in least one point at said first interface area (A), said protective sleeve (5) having at least one deformation at a point facing said flexible probe (3).

2. Data logger (1) according to claim 1, **characterized in that** said protective sleeve (5) comprises a first end (51) configured to face said circular connecting piece 23 and a second end (52) opposite to said first end (51), said second end (52) comprising a flap (520) superimposed on an inner surface of said hollow cylindrical shaped wall in such a way that said protective sleeve (5) has a greater thickness at said second end (52) than a thickness at said first end (51).

3. Data logger (1) according to claim 2, **characterized in that** said thickness of said hollow cylindrical shaped wall at said first end (51) is constant and is comprised between 0,1mm and 2mm, preferably between 0,25mm and 0,75mm, preferably susbstantially equal to 0,5mm.

4. Data logger (1) according to any of claims 2 or 3, **characterized in that** said thickness at the said second end (52) is between two and three times greater than said thickness at said first end (51).

5. Data logger (1) according to any of claims 2 to 4, **characterized in that** said second end (52) extends over an axial length of between 10% and 50% of an axial length of said protective sleeve (5), preferably between 25% and 33% of an axial length of said protective sleeve (5).

6. Data logger (1) according to any of preceding claims, **characterized in that** said protective sleeve (5) has an axial length comprised between 4mm and 12mm, preferably between 6mm and 10mm, preferably susbstantially equal to 8mm.

7. Data logger (1) according to any of preceding claims, **characterized in that** said protective sleeve (5) has a diameter comprised between 2mm and 8mm, preferably between 3mm and 5mm, preferably susbstantially equal to 4mm.

8. Data logger (1) according to any of preceding claims, **characterized in that** said protective sleeve (5) is at least partially made from stainless steel.

9. Data logger (1) according to any of preceding claims, **characterized in that** said protective sleeve (5) is held in position at said first interface area (A) by welding on said tube (22).

10. Data logger (1') according to any of preceding claims, **characterized in that** said data logger (1') comprises a plurality of flexible probes (3), each of said flexible probe (3) passing through a distinct tube (22) so as to exit from said fixation assembly at distinct first interface areas (A), said data logger (1) further comprises a plurality of protective sleeves (5), each of said protective sleeve (5) externally covers one of said distinct first interface areas (A).

11. Data logger (1) according to any of preceding claims, **characterized in that** said first end of flexible probe (3) is prolonged by said at least one head (4) at a second interface area (B), said data logger (1) further comprises means for protecting said second interface area (B), in the form of a protective sleeve (5') having a hollow cylindrical shaped wall extending around an outer surface of at least one part of each of said at least one head (4) and said probe (3) so as to externally cover said second interface area (B).
